# EUROPEAN PATENT APPLICATION

(11) **EP 1 427 226 A1**
(43) Date of publication of application: **09.06.2004**
(21) Application number: 02360335.0
(22) Date of filing: 06.12.2002
(51) Int. Cl.: H04Q 7/22

(54) **Personal digital assistant (PDA) with location based services**

(71) Applicant: ALCATEL, 75008 Paris (FR)
(72) Inventor: Maillard, Hervé, 92370 Chaville (FR)
(74) Representative: Richardt, Markus Albert

(57) **Abstract**

The present invention relates to a method of generating a signal comprising the steps of:
- assigning a condition to a task, the condition having at least one criterion related to a geographical position,
- determining an actual geographical position,
- evaluating the condition by means of the actual geographical position,
- if the condition is fulfilled, outputting of the signal in order to inform a user of the fulfilment of the condition.

## Description

### Field of the invention

The present invention relates to the field of location based services, and more particularly without limitation, to location based services provided by a radio access network.

### Background and prior art

Electronic organisers typically include a 'task-list' or 'to-do-list'. Each entry into the list is descriptive of a task to be performed by the user of the electronic organiser. Typically the user can assign a date and/or time to each one of the tasks. This way due dates for fulfilment of the tasks are specified. When a due date is reached and a task has not been marked as 'completed' a corresponding message is generated by the electronic organiser to remind the user on the task fulfilment. Alternatively or in addition such a warning message is also generated when the task has not been fulfilled a certain time before the due date.

Such electronic organiser functionalities are included in standard office software products like Microsoft Outlook® and also in personal digital assistants like Palm Pilot®. Further some mobile phones also include an electronic organiser.

The invention aims to provide an improved electronic device, such as an electronic organiser, personal digital assistant, mobile phone or other mobile end user device. Further the present invention aims to provide an improved network element of a radio access network to enable location based services for such electronic devices.

### Summary of the invention

The present invention enables to assign a condition to a task which encompasses a geographical position criterion. For example the condition assigned to the task is that the electronic device is located at a certain geographical position. If this condition is fulfilled a corresponding signal is outputted in order to inform a user that the condition which is assigned to the task is met. This way the user is reminded on the task fulfilment.

In essence the present invention enables to assign a condition to a task which is based on a geographical position in addition to or as an alternative to other conditions like a certain due date. For example a user may assign the geographical position of an office to a task. When the user comes to the office the next time the condition is fulfilled. The fulfilment of the condition serves as a trigger for generating a signal to inform the user of the fulfilment of the condition in order to remind the user on the fulfilment of the corresponding task. Such a geographical position condition criterion can be combined with other criteria which are also based on geographical position, on time or other criteria. The overall condition can be formulated as a Boolean expression.

In accordance with a preferred embodiment of the invention a user interface is provided which enables to assign a location name to a geographical position. This facilities the formulation of a geographical position based criterion for a task. Alternatively or in addition such data relating a location name to one or more geographical positions can also be provided to the electronic device by means of an electronic message, such as by short message service (SMS) or email, or on a data carrier like a CD ROM.

In accordance with a further preferred embodiment of the invention the geographical position is provided by location based services of a radio access network, such as a mobile cellular telecommunication network. In the case of a cellular network the cell-ID, mobile location information (MLI), location area identifier (LAI) or the routing area identifier provide geographical position data. In case of a wireless area network (LAN) the SSID or the AP's MAC address or any other AP identifier, provides such geographical position data.

For example when the electronic device logs onto the network the cell-ID of the cell covering the actual geographical position of the electronic device is provided from the network infrastructure to the electronic device. This geographical position data can be used to formulate a condition. Preferably this is done by entering a location name and assigning the location name to the actual geographical position provided by the network infrastructure. On this basis a condition for a task can be formulated.

In addition the actual geographical position is used to evaluate the existing conditions which are assigned to tasks. When one of the conditions is met a corresponding signal is outputted in order to alert the user and remind the user on the task fulfilment.

In accordance with a preferred embodiment of the invention a location-enabling GSM or UMTS network is used as a radio access network. Such a network contains serving mobile location centres (SMLCs) which serve to precisely determine the geographical position of active user equipments. For example Alcatel's intelligent location service (iMLS) can be used for location-based services, and in particular for determining the actual geographical positions of user equipments and providing the actual geographical positions to the user equipments. Another suitable commercially available product is Alcatel 8602 location server/gateway mobile location centre (GMLC) which also enables the positioning of active end user equipments.

In accordance with a further preferred embodiment of the invention the condition is not evaluated by the user equipment but by the network itself. When the network determines that such a condition is fulfilled a corresponding signal is provided to the user in order to remind the user on the task fulfilment.

### Brief description of the drawings

In the following preferred embodiments of the invention are explained in greater detail by making reference to the drawings in which:
- Figure 1: is illustrative of a flow chart of an embodiment of a method of the invention,
- Figure 2: is a block diagram of an active user equipment being locked on a radio access network.

### Detailed description

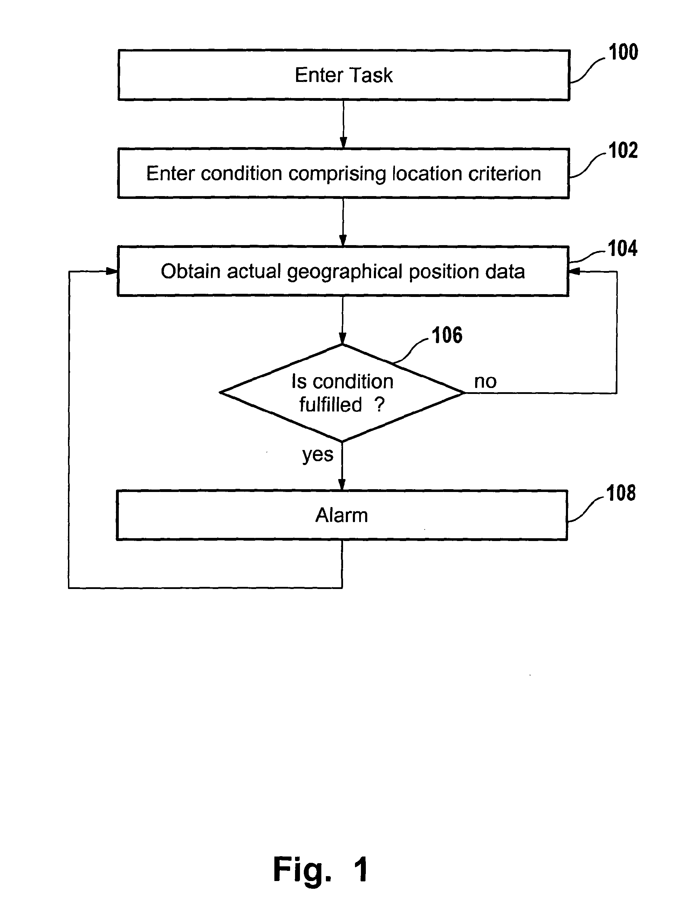

Figure 1 shows a flow chart of an embodiment of the present invention. In step 100 a task is entered into an electronic organiser by a user. For example, the electronic organiser is implemented in a personal digital assistant, a mobile phone, a laptop computer or another mobile wireless device.

In step 102 the user enters a condition to define when the task becomes due. This condition contains at least one location criterion. To enter the condition the user needs to select a certain geographical position. This can be done by selecting a name which is assigned to the geographical position and formulating the condition based on the location name.

For example the user can select the location name L which is assigned to a certain geographical position. Next the user can formulate a Boolean expression containing the location name L. For example the user can enter the condition 'is user X at location L?' In this instance the condition is fulfilled if the actual position of the electronic organiser of the user is at the geographical position assigned to the location name L.

Alternatively more complex conditions can be formulated. For example the condition can be a combination of geographical position and time. In this instance the condition is fulfilled if the electronic device is at the specified geographical position having the assigned location name L within a certain time frame or at a specific time of the day. Further the condition can also encompass more than one user. For example the condition can require that a number of users is at the same specified location.

In step 104 actual geographical position data is obtained. In case the radio access network is a cellular network the actual cell-ID of the cell covering the actual geographical position of the electronic device can be used as geographical position data for the purpose of evaluating the condition entered in step 102. Alternatively more precise geographical position data obtained from location based network services can be used for this purpose.

In step 106 the fulfilment of the condition is checked. If the condition is not fulfilled the control goes back to step 104. If the condition is fulfilled this means that the user is to be reminded on the task to which the condition is assigned; as a consequence a warning, alert or alarm signal is generated in step 108. From there the control goes back to step 104 in order to permanently check whether one or more of the conditions are fulfilled.

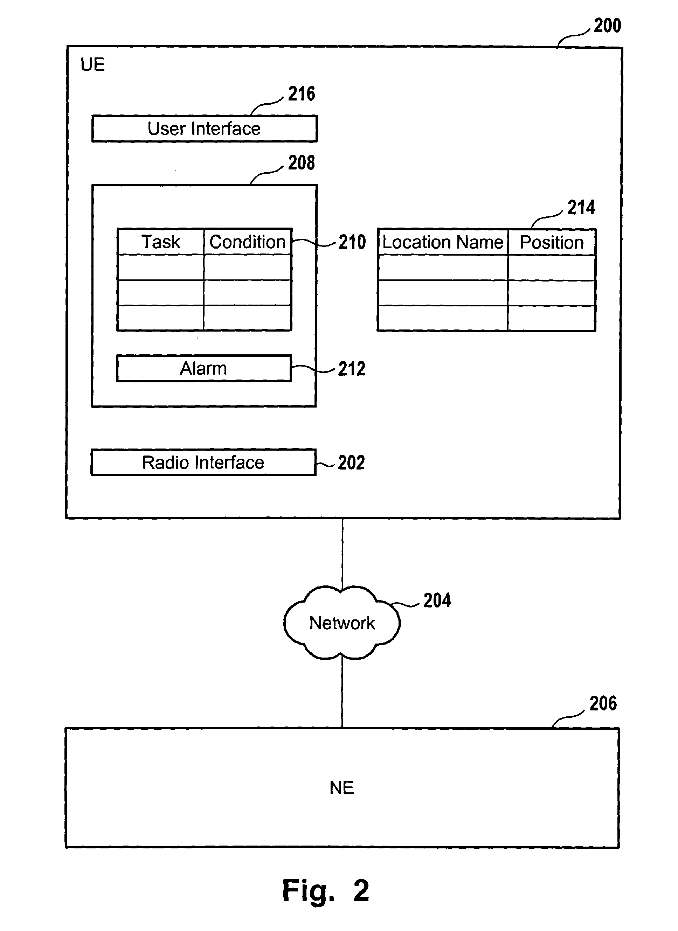

Figure 2 shows a block diagram of an embodiment of the invention. Wireless user equipment 200 has a radio interface 202 to establish telecommunication links via radio access network 204 to a network element 206 or to another active user equipment.

User equipment 200 can be any mobile telecommunication device, such as a personal digital assistant, mobile phone with integrated electronic organiser, laptop computer or another mobile communication and/or computing device having an integrated electronic organiser functionality.

Electronic organiser 208 of user equipment 200 has a task-management functionality. Table 210 contains a list of tasks which a user has previously entered into electronic organiser 208. Each task has an assigned condition which specifies when a task becomes due. For example the user can enter the task 'buy a bottle of milk' and assign the condition 'supermarket'. This means that the task 'buy a bottle of milk' becomes due when the user with the user equipment 200 enters into a specific supermarket. When the condition is fulfilled an alarm is generated by program module 212. For example the alarm signal can be an aural, visual or tactile signal, such as a vibration of the user equipment 200.

Further user equipment 200 has storage 214 for storing of location names and assigned geographical positions. For example each location name has one geographical position, such as 'home', 'office', 'customer X', 'friend Y', ... However a location name can also have a number of assigned geographical positions. For example the location name 'supermarket' can have assigned all geographical positions of a chain of supermarkets.

In the example considered above this means that the condition which has been entered for the task 'buy a bottle of milk' is fulfilled when the user with active user equipment 200 enters any store having a geographical position contained in the list of geographical positions which is assigned to the location name 'supermarket'.

Via user interface 216 the user can make an entry into the table contained in storage 214. For example the user can store the actual geographical position of user equipment 200 and assign a location name to the actual geographical position. This location name can then be used to formulate a condition for a task contained in table 210.

The actual geographical position is provided by radio access network 204, i.e. network element 206 and received by radio interface 202 of user equipment 200. For example the cell-ID of the radio cell covering the actual geographical position of user equipment 200 can serve as the actual geographical position. In this instance the cell-ID is entered as position data in storage 214. Alternatively more precise geographical position data can be provided from the network 204 if it supports location based services.

Alternatively a set of location names with assigned geographical positions can be downloaded by user equipment 200. For example a company operating a number of supermarkets can offer a file on its Internet website containing the name of the company and an assigned list of geographical positions of supermarkets of that company. This file is downloaded and stored in the table of storage 214. This way it is avoided that the user needs to manually input all location names into the storage 214. Also geographical position data is provided this way without a need that the user equipment 200 is actually at that geographical position when the entry is made.

As a further alternative the user enters an address of a certain location via user interface 216. The address is transmitted via network 204 to network element 206. In network element 206 geographical position data of that address is determined. For example network element 206 can look up in a digital map which cell of the cellular radio network covers the address. This cell-ID is then provided back as geographical position data for storage in the table of storage 214.

As a further alternative the user enters a location name of its actual position via user interface 216. This location name is sent via network 204 to network element 206. Network element 206 then assigns mobile location information of the actual geographical position of the user equipment 200 to the provided location name. This mobile location information is then sent back to user equipment 200 for storage in the table of storage 214.

As a further alternative a user can receive a location name with an assigned cell-ID from another user. The location name with the assigned cell-ID can be entered into the table of storage 214. The transmission of the location name with the assigned cell-ID can be done by various channels, such as SMS or Internet.

In operation the actual geographical position of user equipment 200 is permanently provided to user equipment 200 from the network 204 and received by radio interface 202. The actual geographical position data is provided to program module 212 which permanently checks the conditions stored in the table 210. For this purpose program module 212 needs to access the information stored in storage 214 in order to determine whether the actual geographical position matches a geographical position stored in storage 214. If such a match can be found this means that the user equipment 200 is at the location with the location name which is assigned to that geographical position. On this basis the program module 212 can then check whether one or more of the conditions of table 210 is fulfilled or not.

### List of Reference Numerals

- 200: user equipment
- 202: radio interface
- 204: radio access network
- 206: network element
- 208: electronic organiser
- 210: table
- 212: program module
- 214: storage
- 216: user interface

## Claims

1. A method of generating a signal comprising the steps of:
- assigning a condition to a task, the condition having at least one criterion related to a geographical position,
- determining an actual geographical position,
- evaluating the condition by means of the actual geographical position,
- if the condition is fulfilled, outputting of the signal in order to inform a user of the fulfilment of the condition.

2. The method of claim 1 further comprising entering of the at least one criterion by:
- assigning a location name to the geographical position,
- inputting the criterion by means of the location name.

3. The method of claim 1, whereby the geographical position of the criterion and/or the actual geographical position is provided by a wireless radio network.

4. The method of claim 3, whereby the wireless radio network is a cellular network and the geographical position is provided as data being indicative of one of the cells of the cellular network.

5. A computer program product, such as a digital storage medium, comprising program means for generating a signal, the program means being adapted to perform the steps of:
- assigning a condition to a task, the condition having at least one criterion related to a geographical position,
- determining an actual geographical position,
- evaluating the condition by means of the actual geographical position,
- if the condition is fulfilled, outputting of the signal in order to inform a user of the fulfilment of the condition

6. An electronic device comprising:
- means (208, 210) for storing of a task having assigned thereto a condition, the condition having at least one criterion related to a geographical position,
- means (202) for receiving an actual geographical position,
- means (212) for evaluating the condition on the basis of the actual geographic position,
- means (216) for outputting of the signal in order to inform a user of the fulfilment of the condition.

7. The electronic device of claim 6 further comprising means (214, 216) for entering a location name and for assigning the location name to a geographical position.

8. The electronic device of claim 6 the means for determining of an actual geographic position comprising means for receiving of data from a radio access network being indicative of the actual geographical position.

9. A network element of a radio access network comprising:
- means for storing of location names and assigned geographical positions,
- means for providing at least one of the location names and its assigned geographical position to a user equipment.

10. The network element of claim 9 further comprising:
- means for receiving of a condition being assigned to a task, the condition having at least one criterion related to a geographical position,
- means for determining an actual geographical position of a user equipment,
- means for evaluating the condition on the basis of the actual geographic position,
- means for outputting of a signal in order to inform a user of the fulfilment of the condition.
